# EUROPEAN PATENT APPLICATION

(11) **EP 1 335 591 A2**
(43) Date of publication of application: **13.08.2003**
(21) Application number: 03001364.3
(22) Date of filing: 24.01.2003
(51) Int. Cl.: H04N 5/44

(54) **Interfacing system for stream source apparatus receiver and display apparatus and interfacing method thereof**

(30) Priority: 01.02.2002 KR 2002005941
(71) Applicant: LG ELECTRONICS INC., Seoul (KR)
(72) Inventor: Hwang, Ha-Jin, Sungnam, Gyunggi-Do (KR); Bark, Jong-Seok, Gunpo, Gyunggi-Do (KR); Cho, Nam-Seok, Ohsan, Gyunggi-Do (KR)
(74) Representative: Vetter, Ewald Otto

(57) **Abstract**

Disclosed are an interfacing system for stream source apparatus and display apparatus and an interfacing method thereof. The present invention includes a stream source apparatus receiving an analog or a digital signal from an external analog or digital equipment to generate a transmission packet stream corresponding to the analog or digital signal, the stream source apparatus formatting to transform the transmission packet stream into an optical signal form to transmit, and a display apparatus receiving the transmission packet stream transmitted from the stream source apparatus, the display apparatus formatting or decoding the transmission packet stream to separate into a video signal and an audio signal to output through a display screen and a speaker, respectively. Therefore, the present invention uses the thin optical fiber to transmit various video, audio, and various control signals between the stream source apparatus and display apparatus, thereby enabling to overcome the problem of defiling the appearance of the cables exposed on the wall.

## Description

### BACKGROUND OF THE INVENTION

### Field of the Invention

The present invention relates to an interfacing system for stream source apparatus and display apparatus and an interfacing method thereof enabling to transmit/receive transmission packet streams and various control signals between the stream source apparatus and display apparatus through an optical fiber.

### Description of the Related Art

Recent electronic technology developments contribute to the developments of various flat panels display (FPD) devices. In a display device such as a TV screen and a monitor, the flat panel display device replaces a cathode ray tube due to its features and advantages of lightweight, thin design, and the like to employ as a display screen for representing a predetermined image.

A plasma display panel (PDP) using photo-luminescence (PL) as a florescent material, a field emission display device (FED) using cathode luminescence (CL), a liquid crystal display device (LCD), an organic electroluminescent display device, and the like are employed as flat panel display devices in various fields.

In such flat panel display devices, the PDP has such features and advantages as high brightness, high luminescence ratio, low unit cost of production, excellent characteristics of heat & cold resistance, feasibility of full color implementation, and lightweight. Hence, the PDP is equipped with a large size screen and is widely used as a display screen for a display device for TV set, computer monitor, or the like.

Moreover, the display device used as the display screen of the PDP has the feature and advantage of thin design and lightweight, thereby being under development for a wall TV.

The display device using the PDP receives video and audio signals from a stream source device such as a set-top box to output video and audio. For this purpose, the display device and stream source device according to the related art are constructed to transmit/receive the video and audio signals of the stream source device through a wire as well as transmit/receive a predetermined control signal through the wire.

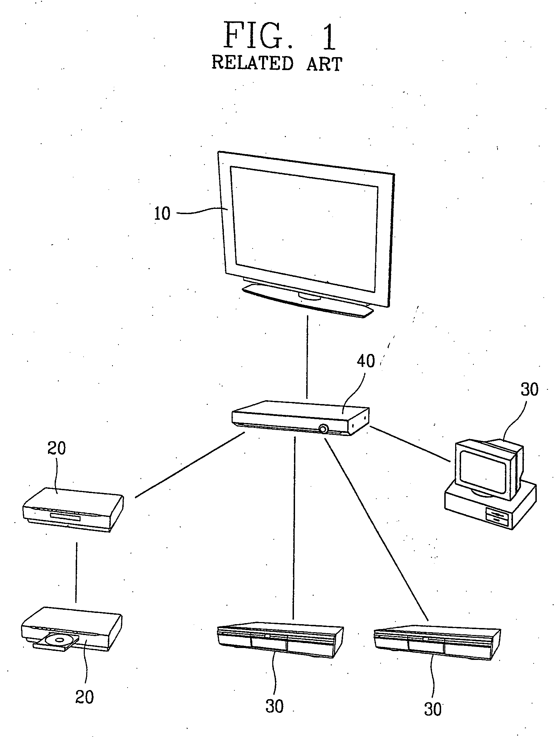

FIG. 1 illustrates a diagram of an interfacing system for stream source device and display device according to a related art.

Referring to Fig. 1, an interfacing system for a stream source device and a display device, like a wall monitor or a wall TV, includes a wall display device 10 using a PDP as a display screen, a digital unit 20 outputting a transmission packet stream corresponding to digital video and audio signals by playing a predetermined play media such as a digital VTR (video tape recorder), a DVD (digital versatile disc) player, or the like, an analog unit 30 outputting analog video and audio signals like a VTR, a computer system, or the like by playing a play media such as video tape or the like, and a stream source device 40 receiving a digital broadcast signal as well as the transmission packet stream outputted from the digital unit 20 and the analog video and audio signals outputted from the analog unit 30 to switch selectively like a set-top box, the stream source device 40 transmitting the switched signals to the display device 10.

In the interfacing system, the digital unit 20 is connected to the source stream source device through a wire such as IEEE 1394 cable.

The interfacing system for the above-constructed display device and stream source device according to a related art is explained in detail as follows.

First of all, the digital unit 20 formats the digital video and audio signals attained by playing the predetermined play media into the transmission packet stream to output, and the outputted transmission packet stream is transmitted to the stream device 40 through the wire such as IEEE 1394 cable.

Meanwhile, the analog unit 30 plays the predetermined play media to generate the analog video and audio signals, and then transmits the generated analog video signals such as R/G/B signals and the analog audio signals to the stream source device 40 through the wire. In this case, the analog unit 30 is connected to the stream source device 40 through an exclusive cable.

The stream source device 40 directly receives the digital broadcast signal through a built-in ATSC tuner or the like. In this case, the received digital broadcast signal includes the transmission packet stream corresponding to the digital video and audio signals.

Moreover, the stream source device 40 transforms the transmission packet stream inputted from the digital unit 20 into the analog video and audio signals, switches the transformed analog video and audio signals or the inputted analog video and audio signals transmitted from the analog unit 30 selectively, and transmits the switched analog video and audio signals to the display device 10.

In this case, the stream source device 40 transmits the analog R/G/B signals and audio signals of L and R channels to the display device 10 through the respective cables or a single exclusive cable. Moreover, the display device and stream source device 10 and 40 are connected to each other through an additional cable for control/response signals to transmit/receive a predetermined control signal and a response signal according to the control signal reciprocally.

However, connected to the various units through the wire(s), the display device requires a plurality of input terminals.

Moreover, when the display device connected to the stream source device through the predetermined cable is hung on a wall, the cable is exposed between the display device and the stream source device to defile the appearance of installation.

### SUMMARY OF THE INVENTION

Accordingly, the present invention is directed to an interfacing system for stream source apparatus and display apparatus and an interfacing method thereof that substantially obviate one or more problems due to limitations and disadvantages of the related art.

An object of the present invention is to provide a source apparatus transforming a transmission packet stream corresponding to digital video/audio signals into an optical signal format to transmit to a display apparatus through an optical fiber.

Another object of the present invention is to provide a display apparatus receiving to process an optical signal transmitted through an optical fiber.

A further object of the present invention is to provide an interfacing method for stream source apparatus and display apparatus which have the display apparatus and stream source apparatus transmit/receive reciprocally through an optical fiber by transforming control and response signals into optical signal formats.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an interfacing system for a stream source apparatus and a display apparatus according to the present invention includes a stream source apparatus receiving an analog or a digital signal from an external analog or digital equipment to generate a transmission packet stream corresponding to the analog or digital signal, the stream source apparatus formatting to transform the transmission packet stream into an optical signal form to transmit, and a display apparatus receiving the transmission packet stream transmitted from the stream source apparatus, the display apparatus formatting or decoding the transmission packet stream to separate into a video signal and an audio signal to output through a display screen and a speaker, respectively.

Preferably, the stream source apparatus includes a central processing unit controlling a series of operations for transmitting video/audio signals to the display apparatus, the central processing unit controlling an operation of the stream source apparatus according to an optical signal, which is received from the display apparatus, by an operation of a remote controller and simultaneously generating a response signal according to the received optical signal, a transmission packet stream generating unit generating a transmission packet stream corresponding to analog or digital video/audio signals inputted externally, a transmission packet stream processing unit processing the transmission packet stream generated from the transmission packet stream generating unit, a memory storing the transmission packet stream processed by the transmission packet stream processing unit, a decoder & video/audio processing unit reading to decode the transmission packet stream stored in the memory and carrying out a video/audio processing on the decoded transmission packet stream to output, a format transforming unit formatting the transmission packet stream outputted from the decoder & video/audio processing unit into a form suitable for the optical signal or receiving to format the optical signal according to a user's operation of the remote controller to input to the central processing unit, the format transforming unit formatting to output a response signal corresponding to the optical signal inputted from the central processing unit, an optical fiber, and an optical signal transmitting/receiving unit transmitting the optical signal outputted from the format transforming unit to the display apparatus through the optical fiber and receiving the optical signal from the display apparatus through the optical fiber to output to the format transforming unit.

Preferably, the display apparatus includes a central processing unit controlling a series of operations of processing the optical signal transmitted from the stream source apparatus and judging a remote control signal received by a remote control receiving unit, the central processing unit transmitting the remote control signal to the stream source apparatus through an optical signal if the remote control signal is a signal for controlling an operation of the stream source apparatus or controlling the display apparatus to carry out a corresponding operation according to the remote control signal if the remote control signal is for controlling a predetermined operation of the display apparatus, an optical signal transmitting/receiving unit transmitting the optical signal transmitted from the optical signal transmitting/receiving unit of the display apparatus and the remote control signal by the remote control signal receiving unit to the stream source apparatus through an optical signal and receiving a corresponding response signal, a format transforming unit formatting the optical signal received by the optical transmitting/receiving unit into a digital video/audio signal form to output and formatting to output the response signal of an optical signal form to the central processing unit, and a video/audio processor outputting the analog or digital video/audio signals outputted from the format transforming unit to a display screen or a speaker.

In another aspect of the present invention, an interfacing method for stream source apparatus and display apparatus includes a judging step of judging whether a remote control signal inputted to the display apparatus in accordance with a user's remote controller operation is a signal for controlling an operation of the stream source apparatus or the display apparatus, a performing step of having the display apparatus carry out a corresponding operation according to the inputted remote control signal if the judging step judges that the remote control signal is the signal for controlling the operation of the display apparatus, a transmitting step of having the display apparatus transform the remote control signal into an optical signal format to transmit to the stream source apparatus through an optical signal, and a step of having the stream source apparatus receive the remote control signal transmitted through the optical signal to carry out a corresponding operation according to the formatted remote control signal.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

In the drawings:
FIG. 1 illustrates a diagram of an interfacing system for stream source device and display device according to a related art;
FIG. 2 illustrates a block diagram of a stream source apparatus according to the present invention;
FIG. 3 illustrates a block diagram of a display apparatus according to the present invention; and
FIG. 4 illustrates a signal flowchart of an interfacing method according to the present invention.

### DETAILED DESCRIPTION OF THE INVENTION

Reference will now be made in detail to the preferred embodiments of the present invention, examples of which are illustrated in the accompanying drawings.

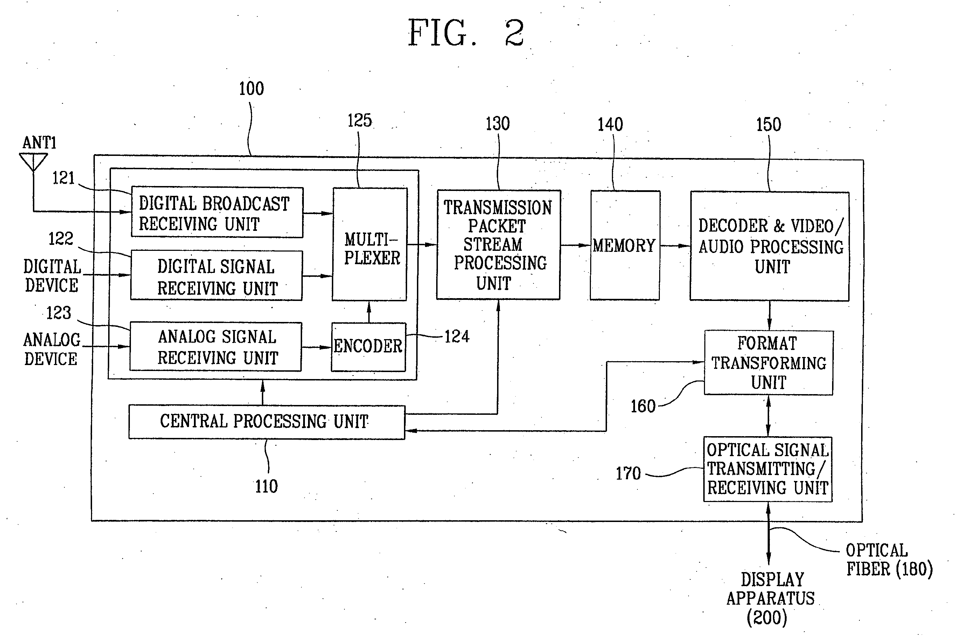

FIG. 2 illustrates a block diagram of a stream source apparatus 100 according to the present invention.

Referring to FIG. 2, a stream source apparatus 100 according to the present invention includes a central processing unit 110 controlling a series of operations for transmitting video/audio signals to a display apparatus 200 that will be explained later, the central processing unit 100 controlling an operation of the stream source apparatus 100 according to an optical signal, which is received from the display apparatus 200, by an operation of a remote controller and simultaneously generating a response signal according to the received optical signal, a transmission packet stream generating unit 120 generating a transmission packet stream corresponding to analog or digital video/audio signals inputted externally, a transmission packet stream processing unit 130 processing the transmission packet stream generated from the transmission packet stream generating unit 120, a memory 140 storing the transmission packet stream processed by the transmission packet stream processing unit 130, a decoder & video/audio processing unit 150 reading to decode the transmission packet. stream stored in the memory 140 and carrying out a video/audio processing on the decoded transmission packet stream to output, a format transforming unit 160 formatting the transmission packet stream outputted from the decoder & video/audio processing unit 150 into a form suitable for the optical signal or receiving to format the optical signal according to a user's operation of the remote controller to input to the central processing unit 110, the format transforming unit 160 formatting to output a response signal corresponding to the optical signal inputted from the central processing unit 110, and an optical signal transmitting/receiving unit 170 transmitting the optical signal outputted from the format transforming unit 160 to the display apparatus 200 through an optical fiber 180 and receiving the optical signal from the display apparatus 200 through the optical fiber 180 to output to the format transforming unit 160.

The transmission packet stream generating unit 120 includes a digital broadcast receiving unit 121 having an ATSC (advanced television systems committee) tuner, a VSB (vestigial side band) chip, and the like to receive a digital broad cast signal through an external antenna ANT1, the digital broadcast receiving unit 121 transforming the received digital broadcast signal into a transmission packet stream form to output, a digital signal receiving unit 122 receiving to output a transmission packet stream corresponding to digital video/audio signals from an external digital equipment, an analog signal receiving unit 123 receiving to output analog video/audio signals from an external analog equipment, an encoder 124 transforming the analog video/audio signals outputted from the analog signal receiving unit 123 into a transmission packet stream form, and a multiplexer 125 selectively switching the transmission packet streams outputted from the digital broadcast receiving unit 121, digital signal receiving unit 122, and encoder 124 according to a control of the central processing unit 110 to output to the transmission packet stream processing unit 130.

In this case, in the digital broadcast receiving unit 121 of the transmission packet stream generating unit 120, the built-in ATSC tuner receives the digital broadcast signal and the built-in VSB chip transforms the received digital broadcast signal into the transmission packet stream form to output to the multiplexer 125.

Moreover, the respective units inside the transmission packet stream generating unit 120, the transmission packet stream processing unit 130, the memory 140, the decoder & video/audio processing unit 150, the format transforming unit 160, and the optical signal transmitting/receiving unit 170 are connected to a control bus (not shown in the drawing) to carry out a predetermined operation in accordance with the control of the central processing unit 110.

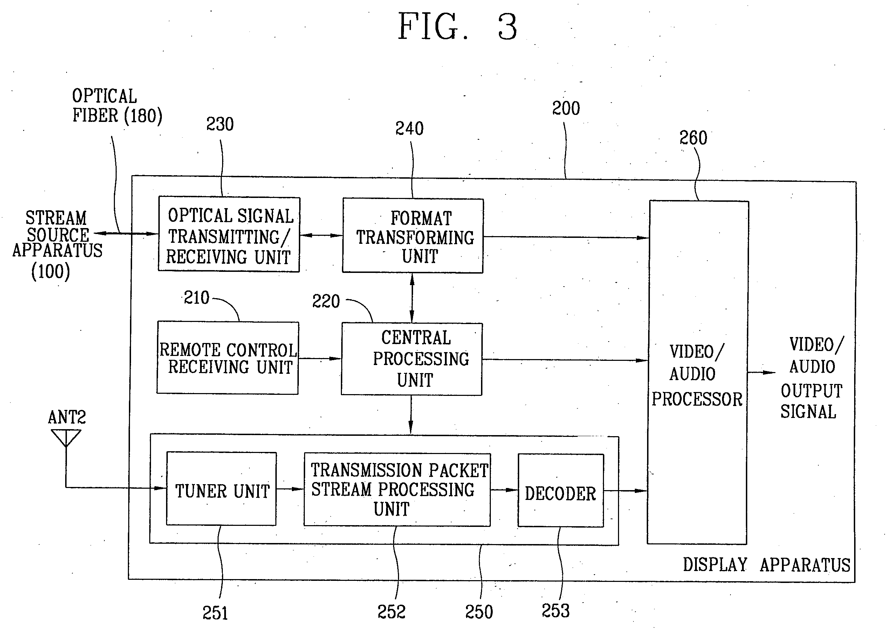

FIG. 3 illustrates a block diagram of a display apparatus 200 according to the present invention.

Referring to FIG. 3, a display apparatus 200 according to the present invention includes a central processing unit 220 controlling a series of operations of processing an optical signal transmitted from the stream source apparatus 100 and judging a remote control signal received by a remote control receiving unit 210 that will be explained later, the central processing unit 220 transmitting the remote control signal to the stream source apparatus 100 through an optical signal if the remote control signal is a signal for controlling an operation of the stream source apparatus 100 or controlling the display apparatus 200 to carry out a corresponding operation according to the remote control signal if the remote control signal is for controlling a predetermined operation of the display apparatus 200, an optical signal transmitting/receiving unit 230 transmitting the optical signal transmitted from the former optical signal transmitting/receiving unit 170 and the remote control signal by the remote control signal receiving unit 210 to the stream source apparatus 100 through an optical signal and receiving a corresponding response signal, a format transforming unit 240 formatting the optical signal received by the optical transmitting/receiving unit 230 into a digital video/audio signal form to output and formatting to output the response signal of an optical signal form to the central processing unit 220, a broadcast signal receiving means 250 for processing to output analog or digital video/audio signals inputted from an external antenna ANT2, and a video/audio processor 260 outputting the analog or digital video/audio signals outputted from the format transforming unit 240 and the broadcast signal receiving means 250 to a display screen or a speaker.

In this case, the broadcast signal receiving means 250 includes a tuner unit 251 having an ATSC (advanced television systems committee) tuner, a VSB (vestigial side band) chip, and the like to select to output the analog or digital broadcast signal selectively through the external antenna ANT2, a transmission packet stream processing unit 253 transforming the analog or digital broadcast signal outputted from the tuner unit 251 into a transmission packet stream form, and a decoder 255 decoding the transmission packet stream outputted from the transmission packet stream processing unit 253 to separate into the analog or digital video/audio signals.

Moreover, the optical signal transmitting/receiving unit 230, format transforming unit 240, respective units inside the broadcast signal receiving means 250, and video/audio processor 260 of the display unit 200 are connected to a control bus (not shown in the drawing) to carry out a predetermined operation in accordance with the control of the central processing unit 210.

An interfacing system for stream source apparatus and display apparatus and an interfacing method thereof according to the present invention are explained in detail by referring to the attached drawings of FIG. 2 and FIG. 3 as follows.

First of all, the digital broadcast receiving unit 121 of the transmission packet stream generating unit 120 receives the digital broadcast signal of a predetermined channel from the external antenna ANT1 using the built-in ATSC tuner, and then the built-in VSB chip or the like transforms the received digital broadcast signal into the transmission packet stream form to output to the multiplexer 125.

Moreover, the digital signal receiving unit 122 of the transmission packet stream generating unit 120 receives the transmission packet stream corresponding to the digital video/audio signals transmitted from the external digital equipment and then outputs the received transmission packet stream to the multiplexer 125.

Meanwhile, the analog signal receiving unit 123 of the transmission packet stream generating unit 120 receives the analog video/audio signals transmitted from the external analog equipment, and the encoder 124 then transforms the received analog video/audio signals into the transmission packet stream form corresponding to the digital video/audio signals to output to the multiplexer 125.

Subsequently, the multiplexer 125 switches the transmission packet streams inputted from the digital broadcast receiving unit 121, digital signal receiving unit 122, and encoder 124 respectively in accordance with the control of the central processing unit 110 to select one of the transmission packet streams.

And, the transmission packet stream processing unit 130 receives to process the selected transmission packet stream to store in the memory 140.

In this case, the single transmission packet stream that the digital broadcast receiving unit 121 receives from the external antenna ANT1 includes a plurality of encoded digital video/audio signals, and the transmission packet stream that the digital signal receiving unit 122 receives from the digital equipment includes a plurality of encoded digital video/audio signals as well.

Subsequently, the transmission packet stream processing unit 130, according to the control of the central processing unit 110, stores the transmission packet stream inputted from the multiplexer 125 in the memory 140.

If the transmission packet stream exceeding a predetermined amount is stored in the memory 140, the decoder & video/audio processing unit 150 reads the transmission packet stream stored in the memory 140 and then decodes to transform the read transmission packet stream into the digital video/audio signals to output to the format transforming unit 160.

The format transforming unit 160 formats to transform the digital video/audio signals inputted from the decoder & video/audio processing unit 150 to be suitable for the optical signal, and the optical signal transmitting/receiving unit 170 transmits the optical signal to the display apparatus 200 through the optical fiber 180.

Thereafter, the optical signal transmitting/receiving unit 230 of the display apparatus 200 receives the optical signal corresponding to the digital video/audio signals transmitted from the optical signal transmitting/receiving unit 170 of the stream source apparatus 100 through the optical fiber 180, and the format transforming unit 240 formats to transform the optical signal to output to the video/audio processor 260.

Meanwhile, the broadcast signal receiving unit 250 of the display apparatus 200 receives the analog or digital broadcast signal of a predetermined channel from the external antenna ANT2 using the ATSC tuner built in the tuner unit 251, and the VSB chip or the like built in the tuner unit 251 then transforms to output the received analog or digital broadcast signal into the transmission packet stream form.

The transmission packet stream processing unit 252, according to the control of the central processing unit 220, encodes the transmission packet stream outputted from the tuner unit 251 to output to the decoder 255.

Subsequently, the decoder 253 decodes to separate the transmission packet stream inputted from the transmission packet stream processing unit 252 into the digital video/audio signals to output to the video/audio processor 260.

The video/audio processor 260, according to the control of the central processing unit 220, processes to output the analog or digital video/audio signals inputted from the format transforming unit 240 and the decoder 253, thereby displaying an image on a screen through a video output means such as PDP or the like and outputting an audio through an audio output means such as a speaker or the like.

Therefore, a user enables to see and hear the digital video/audio signals.

Meanwhile, when the user presses a predetermined key of a remote control transmitter (i.e., remote controller, etc.)(not shown in the drawings) to control an operation of the stream source apparatus 100 or the display apparatus 200, the remote control transmitter generates to transmit a predetermined remote control signal.

The remote control receiving unit 210 then receives to input the transmitted remote control signal to the central processing unit 220.

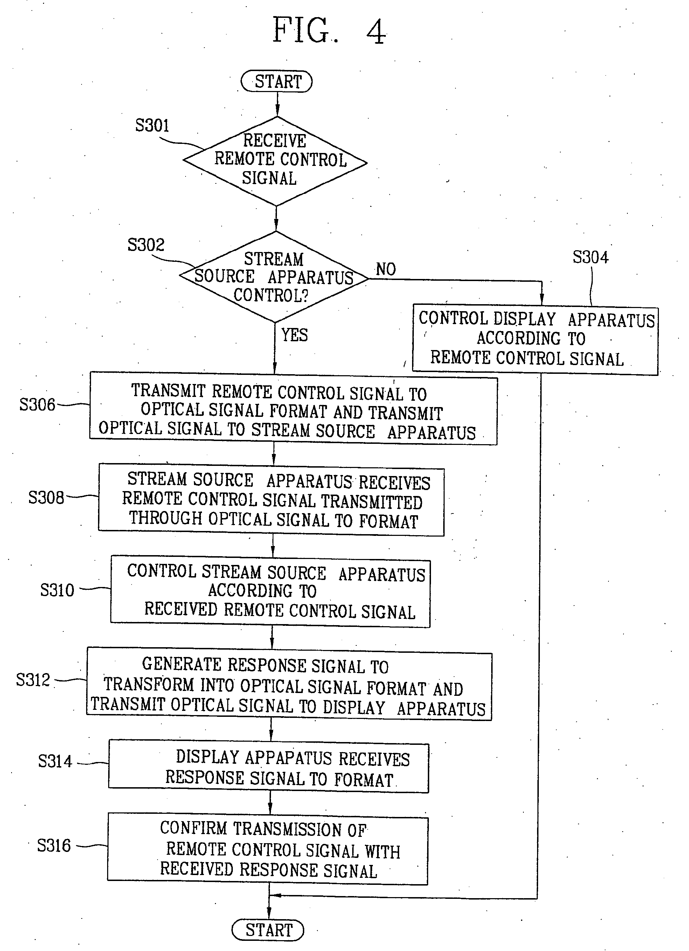

Thereafter, the central processing unit 220 receives the remote control signal from the remote control receiving unit 210 to carry out a predetermined control operation demanded by the user, which is explained in FIG. 4 as follows.

FIG. 4 illustrates a signal flowchart of operating a central processing unit built in a display device according to the present invention.

Referring to FIG. 4, a method of operating a central processing unit includes a judging step of judging whether a remote control signal inputted to a display apparatus in accordance with a user's operation of a remote controller is a signal of controlling an operation of a stream source apparatus or the display apparatus, a performing step of having the display apparatus carry out a corresponding operation according to the inputted remote control signal if the judging step judges that the remote control signal is the signal of controlling the operation of the display apparatus, a transmitting step of having the display apparatus transform the remote control signal into an optical signal format to transmit to the stream source apparatus through an optical signal if the judging step judges that the remote control signal is the signal of controlling the operation of the stream source apparatus, and a step of having the stream source apparatus receive format the remote control signal transmitted through the optical signal to carry out the corresponding operation according to the formatted remote control signal.

A method of operating a central processing unit built in a display apparatus according to the present invention is explained in detail by referring to the attached drawings as follows.

First of all, a central processing unit 220 judges an input of a corresponding remote control signal according to a user's operation of a remote controller (S300), and checks whether the inputted remote control signal is a signal of controlling an operation of a stream source apparatus 100 or not (S302).

In this case, if the remote control signal is not the input according to the user's operation of the remote controller (i.e., if a user presses a wrong key of the remote controller), the central processing unit 220 displays an error sign on a screen of the display apparatus 200 or generates an alarming sound. Thereafter, if the incorrect user's operation of the remote controller continues for a while, an operation carried out prior to the judging step S300 is repeated by an interfacing system for the stream source apparatus 100 and the display apparatus 200 (S301).

As a result of the judgment step S302, if the remote control signal is not the signal of controlling the operation of the stream source apparatus 100 but the signal of controlling the operation of the display apparatus 200, the central processing unit 220 controls the operation of the display apparatus 200 according to the remote control signal to carry out a user-demanding predetermined operation (S304).

Meanwhile, as a result of the judgment step S302, if the remote control signal is the signal of controlling the operation of the stream source apparatus 100, the central processing unit 220 transforms the inputted remote control signal into an optical signal to transmit to the stream source apparatus 100 (S306). In other words, the central processing unit 220 outputs the inputted remote control signal to the format transforming unit 240, and the format transforming unit 240 transforms the remote control signal into the format of the optical signal to transmit to the stream source apparatus 100 through the optical fiber 180.

The optical transmitting/receiving unit 170 of the stream source device 200 receives the transmitted optical signal transformed from the remote control signal and then inputs the optical signal to the central processing unit 110. In this case, the remote control signal corresponding to the received optical signal is formatted by the format transforming unit 160 to input to the central processing unit 110.

Thereafter, the central processing unit 110 of the stream source apparatus 100 controls the operation of the stream source apparatus 100 in accordance with the received remote control signal to carry out the user-demanding predetermined operation (S312).

In this case, through the remote control signal according to the user's operation of the remote controller, a transmission packet stream generating unit 120 receives at least one of transmission packet streams from a digital broadcast receiving unit 121, a digital signal receiving unit 122, and an analog signal receiving unit 123, selects one of the transmission packet streams, and then outputs the selected transmission packet stream to a transmission packet stream processing unit 130. And, the subsequent operations are the same as shown in FIG. 2.

In other words, the remote control signal generated in accordance with the user's operation of the remote controller includes a channel switching signal for switching a channel of the stream source apparatus 100, a volume control signal for adjusting a volume of the stream source apparatus 100, an on/off signal for turning on/off a power of the stream source device, and the like. Hence, the user enables to control both of the stream source apparatus and display apparatus 100 and 200 using a single remote controller.

As mentioned in the foregoing description, the remote control signal generated according to the remote controller operation includes various control signals for performing functions used in a general remote controller as well as the channel switching, volume control, and on/off signals, thereby enabling to carry out the various functions according to the various control signals.

Subsequently, the central processing unit 110 generates a predetermined response signal according to a reception of the remote control signal, i.e. a signal for informing that the remote control signal is normally received to carry out the corresponding operation, and then transforms the generated response signal into the format of the optical signal through the format transforming unit 160 to transmit to the stream source device 200 through the optical signal transmitting/receiving unit 170 (S312).

The transmitted response signal is received by the optical transmitting/receiving unit 130 of the display apparatus 200 (S314), and is then transformed to format by the format transforming unit 140 to input to the central processing unit 210.

Subsequently, through the inputted response signal, the central processing unit 220 confirms that the corresponding remote control signal according to the user's operation of. the remote controller is normally transmitted to the stream source apparatus 100 and that the user-demanding predetermined operation is normally carried out (S316).

Thereafter, a series of operations of the central processing unit 220 for carrying out the user-demanding predetermined control operation by receiving the received remote control signal from the remote control receiving unit 210 is ended.

Meanwhile, the present invention uses the set-top box as the stream source apparatus 100.

Yet, the stream source apparatus 100 is not limited to the set-top box but can be simply applied to various digital and analog equipments such as DVD players, digital and analog VTRs, computer systems, and the like.

Accordingly, in the present invention, the stream source apparatus and display apparatus are connected to each other through the optical fiber. And, the digital video/audio signals, various control signals, and response signals according to the control signals are transmitted/received between the stream source apparatus and display apparatus. Thus, a very thin optical fiber connects the stream source apparatus and display apparatus to each other. Therefore, the present invention achieves the simple connection between the two devices, thereby enabling to overcome the problem of defiling the appearance of the cables exposed on the wall.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. An interfacing system for a stream source apparatus and a display apparatus, comprising:
a stream source apparatus receiving an analog or a digital signal from an external analog or digital equipment to generate a transmission packet stream corresponding to the analog or digital signal, the stream source apparatus formatting to transform the transmission packet stream into an optical signal form to transmit; and
a display apparatus receiving the transmission packet stream transmitted from the stream source apparatus, the display apparatus formatting or decoding the transmission packet stream to separate into a video signal and an audio signal to output through a display screen and a speaker, respectively.

2. The interfacing system of claim 1, the stream source apparatus comprising:
a central processing unit controlling a series of operations for transmitting video/audio signals to the display apparatus, the central processing unit controlling an operation of the stream source apparatus according to an optical signal, which is received from the display apparatus, by an operation of a remote controller and simultaneously generating a response signal according to the received optical signal;
a transmission packet stream generating unit generating a transmission packet stream corresponding to analog or digital video/audio signals inputted externally;
a transmission packet stream processing unit processing the transmission packet stream generated from the transmission packet stream generating unit;
a memory storing the transmission packet stream processed by the transmission packet stream processing unit;
a decoder & video/audio processing unit reading to decode the transmission packet stream stored in the memory and carrying out a video/audio processing on the decoded transmission packet stream to output;
a format transforming unit formatting the transmission packet stream outputted from the decoder & video/audio processing unit into a form suitable for the optical signal or receiving to format the optical signal according to a user's operation of the remote controller to input to the central processing unit, the format transforming unit formatting to output a response signal corresponding to the optical signal inputted from the central processing unit;
an optical fiber; and
an optical signal transmitting/receiving unit transmitting the optical signal outputted from the format transforming unit 160 to the display apparatus through the optical fiber and receiving the optical signal from the display apparatus through the optical fiber to output to the format transforming unit.

3. The interfacing system of claim 2, the transmission packet stream generating unit comprising:
a digital broadcast receiving unit receiving a digital broad cast signal through an external antenna, the digital broadcast receiving unit transforming the received digital broadcast signal into a transmission packet stream form to output;
a digital signal receiving unit receiving to output a transmission packet stream corresponding to digital video/audio signals from an external digital equipment;
an analog signal receiving unit receiving to output analog video/audio signals from an external analog equipment;
an encoder transforming the analog video/audio signals outputted from the analog signal receiving unit into a transmission packet stream form; and
a multiplexer switching the transmission packet streams outputted from the digital broadcast receiving unit, digital signal receiving unit, and encoder according to a control of the central processing unit to output to the transmission packet stream processing unit selectively.

4. The interfacing system of claim 2 or 3, wherein the optical transmitting/receiving unit receives a remote control signal transmitted by wireless according to a user's operation of a remote controller and outputs the received remote control signal to the central processing unit to carry out a user-demanding predetermined operation.

5. The interfacing system of at least one of claims 2 to 4, wherein, if a remote control signal according to a user's operation of a remote controller is a signal for controlling the stream source apparatus, the optical transmitting/receiving unit receives the remote control signal and receives a response signal corresponding to the remote control signal transmitted from the central processing unit to transmit to the display apparatus.

6. The interfacing system of at least one of claims 2 to 5, the display apparatus comprising:
a central processing unit controlling a series of operations of processing the optical signal transmitted from the stream source apparatus and judging a remote control signal received by a remote control receiving unit, the central processing unit transmitting the remote control signal to the stream source apparatus through an optical signal if the remote control signal is a signal for controlling an operation of the stream source apparatus or controlling the display apparatus to carry out a corresponding operation according to the remote control signal if the remote control signal is for controlling a predetermined operation of the display apparatus;
an optical signal transmitting/receiving unit transmitting the optical signal transmitted from the optical signal transmitting/receiving unit of the display apparatus and the remote control signal by the remote control signal receiving unit to the stream source apparatus through an optical signal and receiving a corresponding response signal;
a format transforming unit formatting the optical signal received by the optical transmitting/receiving unit into a digital video/audio signal form to output and formatting to output the response signal of an optical signal form to the central processing unit; and
a video/audio processor outputting the analog or digital video/audio signals outputted from the format transforming unit to a display screen or a speaker.

7. The interfacing system of claim 6, wherein the remote control receiving unit receives the remote control signal according to the user's operation of the remote controller and outputs the received remote control signal to the central processing unit to carry out a predetermined user-demanding operation.

8. The interfacing system of claim 6 or 7, further comprising a broadcast signal receiving means for processing analog or digital video/audio signals inputted from an external antenna to output to the video/audio processor.

9. The interfacing system of. claim 8, the broadcast signal receiving means comprising:
a tuner unit selectively receiving to output the analog or digital broadcast signal selectively through the external antenna;
a transmission packet stream processing unit transforming the analog or digital broadcast signal outputted from the tuner unit into a transmission packet stream form; and
a decoder decoding the transmission packet stream outputted from the transmission packet stream processing unit to separate into the analog or digital video/audio signals.

10. A stream source apparatus comprising:
a central processing unit controlling a series of operations for transmitting video/audio signals to the display apparatus, the central processing unit controlling an operation of the stream source apparatus according to an optical signal, which is received from the display apparatus, by an operation of a remote controller and simultaneously generating a response signal according to the received optical signal;
a transmission packet stream generating unit generating a transmission packet stream corresponding to analog of digital video/audio signals inputted externally;
a transmission packet stream processing unit processing the transmission packet stream generated from the transmission packet stream generating unit;
a memory storing the transmission packet stream processed by the transmission packet stream processing unit;
a decoder & video/audio processing unit reading to decode the transmission packet stream stored in the memory and carrying out a video/audio processing on the decoded transmission packet stream to output;
a format transforming unit formatting the transmission packet stream outputted from the decoder & video/audio processing unit into a form suitable for the optical signal or receiving to format the optical signal according to a user's operation of the remote controller to input to the central processing unit, the format transforming unit formatting to output a response signal corresponding to the optical signal inputted from the central processing unit;
an optical fiber; and
an optical signal transmitting/receiving unit transmitting the optical signal outputted from the format transforming unit to the display apparatus through the optical fiber and receiving the optical signal from the display apparatus through the optical fiber to output to the format transforming unit.

11. The interfacing system of claim 10, the transmission packet stream generating unit comprising:
a digital broadcast receiving unit receiving a digital broad cast signal through an external antenna, the digital broadcast receiving unit transforming the received digital broadcast signal into a transmission packet stream form to output;
a digital signal receiving unit receiving to output a transmission packet stream corresponding to digital video/audio signals from an external digital equipment;
an analog signal receiving unit receiving to output analog video/audio signals from an external analog equipment;
an encoder transforming the analog video/audio signals outputted from the analog signal receiving unit into a transmission packet stream form; and
a multiplexer switching the transmission packet streams outputted from the digital broadcast receiving unit, digital signal receiving unit, and encoder according to a control of the central processing unit to output to the transmission packet stream processing unit selectively.

12. The interfacing system of claim 10 or 11, wherein the optical transmitting/receiving unit receives a remote control signal transmitted by wireless according to a user's operation of a remote controller and outputs the received remote control signal to the central processing unit to carry out a user-demanding predetermined operation.

13. The interfacing system of at least one of claims 10 to 12, wherein, if a remote control signal according to a user's operation of a remote controller is a signal for controlling the stream source apparatus, the optical transmitting/receiving unit receives the remote control signal and receives a response signal corresponding to the remote control signal transmitted from the central processing unit to transmit to the display apparatus.

14. A display apparatus comprising:
a central processing unit controlling a series of operations of processing an optical signal transmitted from the stream source apparatus and judging a remote control signal received by a remote control receiving unit, the central processing unit transmitting the remote control signal to the stream source apparatus through an optical signal if the remote control signal is a signal for controlling an operation of the stream source apparatus or controlling the display apparatus to carry out a corresponding operation according to the remote control signal if the remote control signal is for controlling a predetermined operation of the display apparatus;
an optical signal transmitting/receiving unit transmitting the optical signal transmitted from the optical signal transmitting/receiving unit of the display apparatus and the remote control signal by the remote control signal receiving unit to the stream source apparatus through an optical signal and receiving a corresponding response signal;
a format transforming unit formatting the optical signal received by the optical transmitting/receiving unit into a digital video/audio signal form to output and formatting to output the response signal of an optical signal form to the central processing unit; and
a video/audio processor outputting the analog or digital video/audio signals outputted from the format transforming unit to a display screen or a speaker.

15. The interfacing system of claim 14, wherein the remote control receiving unit receives the remote control signal according to the user's operation of the remote controller and outputs the received remote control signal to the central processing unit to carry out a predetermined user-demanding operation.

16. The interfacing system of claim 14 or 15, further comprising a broadcast signal receiving means for processing analog or digital video/audio signals inputted from an external antenna to output to the video/audio processor.

17. The interfacing system of claim 16, the broadcast signal receiving means comprising:
a tuner unit selectively receiving to output the analog or digital broadcast signal selectively through the external antenna ;
a transmission packet stream processing unit transforming the analog or digital broadcast signal outputted from the tuner unit into a transmission packet stream form; and
a decoder decoding the transmission packet stream outputted from the transmission packet stream processing unit to separate into the analog or digital video/audio signals.

18. An interfacing method for stream source apparatus and display apparatus, comprising:
a judging step of judging whether a remote control signal inputted to the display apparatus in accordance with a user's remote controller operation is a signal for controlling an operation of the stream source apparatus or the display apparatus;
a performing step of having the display device carry out a corresponding operation according to the inputted remote control signal if the judging step judges that the remote control signal is the signal for controlling the operation of the display apparatus;
a transmitting step of having the display apparatus transform the remote control signal into an optical signal format to transmit to the stream source apparatus through an optical signal; and
a step of having the stream source apparatus receive the remote control signal transmitted through the optical signal to carry out a corresponding operation according to the formatted remote control signal.

19. The method of claim 18, further comprising a step of having the stream source apparatus carry out the operation according to the remote control signal transmitted through the optical signal and having the stream source apparatus transform a response signal for informing that the remote control signal is normally received into the optical signal format to transmit to the display apparatus.
